# EUROPEAN PATENT SPECIFICATION

(11) **EP 1 918 419 B1**
(45) Date of publication and mention of the grant of the patent: **20.02.2013**
(21) Application number: 06781396.4
(22) Date of filing: 14.07.2006
(51) Int. Cl.: C23C 22/44, C23C 22/36, B32B 9/00, B32B 15/04, C09D 5/00, C09D 7/12, C09D 183/04, C23C 22/42, C09D 5/08, C09D 4/00

(54) **Metallic material having chromate-free-treated surface excellent in corrosion resistance, heat resistance, anti-fingerprint property, conductivity, coating property and black deposit resistance during processing**
Metallisches Material mit chromatfrei behandelter Oberfläche von herausragender Korrosionsbeständigkeit, Wärmebeständigkeit, Fingerabdruck abweisenden Eigenschaften, Leitfähigkeit, Beschichtbarkeit und Beständigkeit gegen schwarze Ablagerungen während der Verarbeitung
Matériau métallique ayant une surface traitée sans chromate excellent en termes de résistance à la corrosion, résistance à la chaleur, propriétés contre les traces de doigts, de conductivité, de propriété de revêtement et de resistance

(30) Priority: 22.07.2005 JP 2005213243; 05.07.2006 JP 2006185753
(43) Date of publication of application: 07.05.2008
(73) Proprietor: Nippon Steel & Sumitomo Metal Corporation, Tokyo 100-8071 (JP)
(72) Inventor: KANETO, Taihei, Kimitsu-shi, Chiba 299-1141 (JP); MORISHITA, Atsushi, Kimitsu-shi, Chiba 299-1141 (JP); KIMATA, Yoshio, Kimitsu-shi, Chiba 299-1141 (JP); TAKAHASHI, Akira, Kimitsu-shi, Chiba 299-1141 (JP); KIKUCHI, Ikuo, c/o NIPPON STEEL CORP., Himeji-shi, Hyogo 671-1188 (JP); NOMURA, Shinji, c/o NIHON PARKERIZING CO. LTD., Tokyo 103-0027 (JP); YAMAGUCHI, Hidehiro, c/o NIHON PARKERIZING CO. LTD, Tokyo 103-0027 (JP)
(74) Representative: Vossius & Partner
(86) International application number: PCT/JP2006/314441
(87) International publication number: WO 2007/011008

(56) References cited:
- EP-A1- 0 949 353
- EP-A1- 1 426 466
- DE-A1- 19 754 108
- JP-A- 08 073 775
- JP-A- 2001 335 954

## Description

### TECHNICAL FIELD

The present invention relates to a chromate-free surface treated metal material with excellent corrosion resistance, heat resistance, fingermark resistance, conductivity, coatability, and blackening resistance at the time of working.

### BACKGROUND ART

In general, as technologies for giving a coating excellent in adhesion to the-surface of a metal material and imparting corrosion resistance, fingermark resistance, etc. to the surface of a metal material, a method of chromate treatment of the surface of a metal material by a treatment solution containing chromic acid, dichromic acid, or a salt thereof as main ingredients, a method of treating it by a phosphate, a method of treating it by a silane coupling agent alone, a method of treating it by an organic resin coating, etc. have been known and put into use.

As technology mainly using inorganic ingredients, JP 2002-30460 A describes a metal surface treatment agent containing a vanadium compound and a metal compound including at least one metal selected from zirconium, titanium, molybdenum, tungsten, manganese, and cerium.

On the other hand, as technology using mainly a silane coupling agent, US 5,292,549 teaches treatment of a metal sheet by an aqueous solution containing a low concentration of an organic functional silane and cross-linking agent for obtaining a temporary corrosion proofing effect. This discloses a method of having the cross-linking agent cross-link the organic functional silane so as to form a dense siloxane film.

Further, JP 2003-105562 A discloses a nonchromate surface treated steel sheet excellent in corrosion resistance and excellent in fingermark resistance, blackening resistance, and coating adhesion obtained using a surface treatment agent containing a specific resin compound (A), cationic urethane resin (B) having at least one type of cationic functional group selected from primary to tertiary amino groups and a quaternary ammonium salt group, at least one type of silane coupling agent (C) having a specific reactive functional group, and a specific acid compound (E) and having contents of the cationic urethane resin (B) and silane coupling agent (C) in predetermined ranges and a method of production of the same.

However, these technologies do not satisfy all of the requirements of corrosion resistance, heat resistance, fingermark resistance, conductivity, and blackening resistance at the time of working and continue to have problems for practical application.

In this way, at the present time, none of these methods can give a surface treatment agent able to be used to replace a chromate film. Development of a surface treatment agent and method of treatment able to comprehensively satisfy these is being strong demanded.

### DISCLOSURE OF THE INVENTION

The present invention has as its object to solve the above problem in the prior art and provide a metal material given a chromate-free surface treatment satisfying all of the requirements of corrosion resistance, heat resistance, fingermark resistance, conductivity, coatability, and blackening resistance at the time of working.

The inventors engaged in repeated intensive studies to solve this problem and as a result discovered that by coating and drying on the surface of a metal material an aqueous metal surface treatment agent comprising an organic silicon compound (W), obtained by blending two types of specific silane coupling agents in a specific solid weight ratio and containing at least two specific functional groups in its molecule and containing at least one specific hydrophilic functional group, a fluorocompound (X), phosphoric acid (Y), and a vanadium compound (Z) so as to form a composite coating containing the different ingredients, it is possible to obtain a chromate-free surface treated metal material satisfying all of the requirements of corrosion resistance, heat resistance, fingermark resistance, conductivity, coatability, and blackening resistance at the time of working and thereby completed the present invention.

That is, the present invention relates to a surface treated metal material, characterized by being comprised of a metal material on the surface of which is coated and dried an aqueous metal surface treatment agent , wherein the coating and dring is conducted at a peak temperature higher than 50°C and less than 250°C to give a dried coating weight of 0.05 to 2.0 g/m² comprising an organic silicon compound (W), obtained by blending a silane coupling agent (A) containing one amino group in its molecule and a silane coupling agent (B) containing one glycidyl group in its molecule in a solid weight ratio [(A)/(B)] of 0.5 to 1.7 and containing, in its molecule, at least two functional groups (a) represented by the formula -SiR¹R²R³ (wherein, R¹, R², and R³ independently represent an alkoxy group or hydroxy group, at least one representing an alkoxy group) and one or more of at least one type of hydrophilic functional group (b) selected from hydroxy group (one separate from that able to be included in the functional group (a)) and an amino group, and having an average molecular weight of 1000 to 10000, at least one type of fluorocompound (X) selected from fluorotitanic acid or fluorozirconic acid, phosphoric acid (Y), and a vanadium compound (Z) so as to form a composite coating containing the different ingredients, and among the'ingredients of the composite coating, the solid weight ratio [(X)/(W)] of the organic silicon compound (W) and fluorocompound (X) being 0.02 to 0.07, the solid weight ratio [(Y)/(W)] of the organic silicon compound (W) and phosphoric acid (Y) being 0.03 to 0.12, the solid weight ratio [(Z)/(W)] of the organic silicon compound (W) and vanadium compound (Z) being 0.05 to 0.17, and the solid weight ratio [(Z)/(X)] of the fluorocompound (X) and vanadium compound (Z) being 1.3 to 6.0.

Preferably, the aqueous metal surface treatment agent further contains, as an ingredient (C), in the coating, at least one type of cobalt compound selected from the group comprised of cobalt sulfate, cobalt nitrate, and cobalt carbonate, where the solid weight ratio [(C)/(W)] of the organic silicon compound (W) and cobalt compound (C) is 0.1 to 0.1.

The metal material is preferably a zinc-based plated steel sheet.

The surface treated metal material of the present invention satisfies all of the requirements of the corrosion resistance, heat resistance, fingermark resistance, conductivity, coatability, and blackening resistance at the time of working.

### BEST MODE FOR CARRYING OUT THE INVENTION

The metal materials able to be used in the present invention are not particularly limited, and may include, for example, iron, an iron-based alloy, aluminum, an aluminum-based alloy, copper, a copper-based alloy, etc. A plated metal material comprised of any of these metal materials which are then plated can also be used. Among these, the most preferable in applications of the present invention is a zinc-based plated steel sheet. The zinc-based plated steel sheets include those such as zinc-plated steel sheets, zinc-nickel plated steel sheets, zinc-iron plated steel sheets, zinc-chrome plated steel sheets, zinc-aluminum plated steel sheets, zinc-titanium plated steel sheets, zinc-magnesium plated steel sheets, zinc-manganese plated steel sheets, zinc-aluminum-magnesium plated steel sheets, and zinc-aluminum-magnesium-silicon plated steel sheets, and other zinc-based plated steel sheets with these plating layers further containing small amounts of different metal elements or impurities such as cobalt, molybdenum, tungsten, nickel, titanium, chrome, aluminum, manganese, iron, magnesium, lead, bismuth, antimony, tin, copper, cadmium, arsenic, etc. or having silica, alumina, titania, or other inorganic matter dispersed. Further, the above plating and another type of plating, for example iron plating, iron-phosphorus plating, nickel plating, or cobalt plating, may be combined to obtain double-layer plating. The plating method is not particularly limited, but a known electroplating method, hot dip plating, vapor deposition plating method, dispersion plating method, vacuum plating method or the like may be used.

The essential ingredient organic silicon compound (W) of the aqueous metal surface treatment agent for a chromate-free surface treated metal material of the present invention is obtained by blending a silane coupling agent (A) containing one amino group in the molecule and a silane coupling agent (B) containing one glycidyl group in the molecule in a solid weight ratio [(A)/(B)] of 0.5 to 1.7. The silane coupling agent (A) and the silane coupling agent (B) are needed to be blended in a solid weight ratio [(A)/(B)] of 0.5 to 1.7, preferably 0.7 to 1.7, and most preferably 0.9 to 1.1. If the solid weight ratio [(A)/(B)] is less than 0.5, the fingermark resistance, bath stability, and blackening resistance remarkably fall, so this is not preferable. Conversely, if over 1.7, the waterproofness remarkably falls, so this is not preferable.

Further, the silane coupling agent (A) containing one amino group in the molecule in the present invention is not particularly limited, but, 3-aminopropyltriethoxysilane, 3-aminopropyltrimethoxysilane, etc. may be illustrated. As the silane coupling agent (B) containing one glycidyl group in the molecule, 3-glycidoxypropyltrimethoxysilane, 3-glycidoxypropyltriethoxysilane, etc. may be illustrated.

Further, the method of production of the organic silicon compound (W) of the present invention is not particularly limited, but a method of successively adding the silane coupling agent (A) and the silane coupling agent (B) to water adjusted to a pH 4 and stirring for a predetermined time may be mentioned.

The number of the functional groups (a) in the essential ingredient organic silicon compound (W) of the present invention has to be two or more. If the number of functional groups (a) is 1, the bonding force to the surface of a metal material and the film-formability fall, so the blackening resistance falls. The number of carbon atoms in the alkoxy group in the definitions of R¹, R², and R³ of the functional group (a) is not particularly limited, but 1 to 6 is preferable, 1 to 4 is more preferable, and 1 or 2 is most preferable. It is sufficient that at least one functional group (b) is present in a molecule. The organic silicon compound (W) has to have an average molecular weight of 1000 to 10000, with 1300 to 6000 being preferable. The molecular weight referred to here is not particularly limited, but either one obtained by direct measurement by a TOF-MS method or one obtained by conversion and measurement by a chromatography method may be applicable. If the average molecular weight is less than 1000, the coating formed remarkably falls in waterproofness. On the other hand, if the average molecular weight is larger than 10000, it becomes difficult to stably dissolve or disperse the organic silicon compound.

Further, regarding the amount blended of the essential ingredient fluorocompound (X) of the present invention, the solid weight ratio [(X)/(W)] of the organic silicon compound (W) and fluorocompound (X) has to be 0.02 to 0.07, preferably 0.03 to 0.06, and most preferably 0.04 to 0.05. If the solid weight ratio [(X)/(W)] of the organic silicon compound (W) and fluorocompound (X) is less than 0.02, the effect of addition is not manifested, so this is not preferable. Conversely, if larger than 0.07, the conductivity falls, so this is not preferable.

Further, regarding the amount blended of the essential ingredient phosphoric acid (Y) of the present invention, the solid weight ratio [(Y)/(W)] of the organic silicon compound (W) and phosphoric acid (Y) has to be 0.03 to 0.12, preferably 0.05 to 0.12, and most preferably 0.09 to 0.1. If the solid weight ratio [(Y)/(W)] of the organic silicon compound (W) and phosphoric acid (Y) is less than 0.03, the effect of addition is not manifested, so this is not preferable. Conversely, if over 0.12, the coating becomes remarkably water soluble, so this is not preferable.

Further, regarding the amount blended of the essential ingredient vanadium compound (Z) of the present invention, the solid weight ratio [(Z)/(W)] of the organic silicon compound (W) and vanadium compound has to be 0.05 to 0.17, preferably 0.07 to 0.15, more preferably 0.09 to 0.14, and most preferably 0.11 to 0.13. If the solid weight ratio [(Z)/(W)] of the organic silicon compound (W) and vanadium compound is less than 0.05, the effect of addition is not manifested, so this is not preferable. Conversely, if over 0.17, the stability drops sharply, so this is not preferable.

Further, the vanadium compound (Z) in the present invention is not particularly limited, but vanadium pentaoxide V₂O₅, metavanadic acid HVO₃, ammonium metavanadate, sodium metavanadate, vanadium oxytrichloride VOCl₃, vanadium trioxide V₂O₃, vanadium dioxide VO₂, vanadium oxysulfate VOSO₄, vanadium oxyacetylacetonate VO(OC(=CH₂)CH₂COCH₃))₂, vanadium acetylacetonate V(OC(=CH₂)CH₂COCH₃))₃, vanadium trichloride VCl₃, phosphorus vanadomolybdic acid, etc. may be mentioned. Further, a vanadium compound obtained by reducing a pentavalent compound to a tetravalent to a bivalent compound by an organic compound having at least one type of functional group selected from the group comprised of hydroxy group, carbonyl group, carboxyl group, primary to tertiary amino group, amide group, phosphoric acid group, and phosphonic acid group may be used.

Further, regarding the amounts blended of the essential ingredients of the present invention, that is, the fluorocompound (X) and vanadium compound (Z), the solid weight ratio [(Z)/(X)] of the fluorocompound (X) and vanadium compound (Z) has to be 1.3 to 6.0, preferably 1.3 to 3.5, more preferably 2.5 to 3.3, and most preferably 2₋8 to 3.0. If the solid weight ratio [(Z)/(X)] of the fluorocompound (X) and vanadium compound (Z) is less than 1.3, the effect of addition of the vanadium compound (Z) is not manifested, so this is.not preferable. Conversely, if over 6.0, the bath stability and blackening resistance falls, so this is not preferable.

The additional ingredient in the present invention, that is, the cobalt compound (C), has to be at least one type of cobalt compound selected from the group comprised of cobalt sulfate, cobalt nitrate, and cobalt carbonate. Further, the ratio blended has to be a solid weight ratio [(C)/(W)] of the organic silicon compound (W) and cobalt compound (C) of 0.01 to 0.1, preferably 0.02 to 0.07, and most preferably 0.03 to 0.05. If the solid weight ratio [(C)/(W)] of the organic silicon compound (W) and cobalt compound (C) is less than 0.01, the effect of addition of the cobalt compound (C) is not exhibited, so this is not preferable. Conversely, if larger than 0.1, the corrosion resistance falls, so this is not preferable.

The surface treated metal material of the present invention is coated with the aqueous metal surface treatment agent and dried at a peak temperature higher than 50°C and less than 250°C, so as to have a dried coating weight of 0.05 to 2.0 g/m². Regarding the drying temperature, a peak temperature of 70°C to 150°C is preferable, and 100°C to 140°C is more preferable. If the peak temperature is 50°C or less, the solvent of the aqueous metal surface treatment agent does not completely evaporate, so this is not preferable. Conversely, if 250°C or more, part of the organic chain of the coating formed by the aqueous metal surface treatment agent breaks down, so this is not preferable. The coating weight is 0.05 to 2.0 g/m² 0.2 to 1.0 g/m² is preferable, and 0.3 to 0.6 g/m² is more preferable. If the coating weight is less than 0.05 g/m², the surface of the metal material cannot be covered, so the corrosion resistance remarkably falls, so this is not preferable. Conversely, if larger than 2.0 g/m², the blackening resistance at the time of working falls, so this is not preferable.

For the aqueous metal surface treatment agent used in the present invention, a leveling agent or water soluble solvent for improving the coatability, a metal stabilizing agent, an etching inhibitor, a pH adjuster, etc. can be used in a range not impairing the effect of the present invention. As the leveling agent, a nonionic or cationic surfactant such as polyethylene oxide or a polypropylene oxide adduct or an acetylene glycol compound etc. may be mentioned, while as a water soluble solvent, alcohols such as ethanol, isopropyl alcohol, t-butyl alcohol, and propylene glycol, Cellosolves such as ethyleneglycol monobutyl ether and ethyleneglycol monoethyl ether, esters such as ethyl acetate and butyl acetate, and ketones such as acetone, methyl ethyl ketone, methyl isobutyl ketone, may be mentioned. As the metal stabilizing agent, EDTA, DTPA, or other chelating compounds may be mentioned. As the etching inhibitor, ethylene diamine, triethylene pentamine, guanidine, pyrimidine, and other amine compounds may be mentioned. In particular, compounds having two or more amino groups in the molecule are effective as metal stabilizing agents and are more preferable. As the pH adjuster, acetic acid, lactic acid, or other organic acids, fluoric acid or other inorganic acids, ammonium salts, amines, etc. may be mentioned.

The surface treated metal material of the present invention satisfies all of the requirements of corrosion resistance, heat resistance, fingermark resistance, conductivity, coatability, and blackening resistance at the time of working. The reason is believed to be as follows, but the present invention is not bound by this belief. The coating formed using the aqueous metal surface treatment agent used in the present invention is mainly based on organic silicon compounds. First, the corrosion resistance is believed to be due to the remarkable barrier effect exhibited by the organic silicon compounds partially reacting with each other, when the organic silicon compounds are condensed due to drying etc., to form a continuous coating, and due to part of the organic silicon compounds hydrolyzing to form -Si-OH groups which form Si-O-M bonds (M: metal element of coated surface) with the metal surface. Further, a dense coating can be formed, so the coating can be made thinner and the conductivity also becomes better.

On the other hand, using the aqueous metal surface treatment agent of the present invention, a coating is formed based on silicon. Regarding its structure, the silicon-organic chains are regularly arrayed. Further, the organic chains are relatively short. Therefore, in extremely small sections in the coating, silicon-containing parts and organic parts, that is, inorganic matter and organic matter, are regularly and densely arrayed. Therefore, it is believed that a novel coating having both the heat resistance, conductivity, and blackening resistance during working normally possessed by an inorganic coating and the fingermark resistance, coatability and the like normally possessed by an organic coating can be formed. Note that in the silicon containing part in the coating, it was confirmed by analysis that about 80% of the silicon forms siloxane bonds.

By adding to such a base coating, for the purpose of imparting corrosion resistance, a fluorocompound for forming a dense coating by raising the pH very near the treated metal surface resulting from the etching reaction, phosphoric acid as an elution inhibitor, and a vanadium compound imparting corrosion resistance by an oxidation reduction reaction, it is believed that in addition to heat resistance, fingermark resistance, conductivity, coatability, and blackening resistance during working, excellent corrosion resistance is manifested.

### EXAMPLES

Examples of the present invention and comparative examples will be given below to explain the present invention more specifically, but the present invention is not limited to them. The methods of preparing the test sheets, examples and comparative examples, and the methods of coating the surface treatment agent for a metal material will be explained below.

### Preparation of Test Sheets

### (1) Test Materials

The commercially available materials shown below were used.
- Electrogalvanized steel sheet (EG): sheet thickness = 0.8 mm, amount of plating = 20/20 (g/m²)
- Hot dip zincing steel sheet (GI): sheet thickness = 0.8 mm, amount of plating = 90/90 (g/m²)
- Electrogalvanized-12% nickel plating (ZL): sheet thickness =0.8 mm, amount of plating = 20/20 (g/m²)
- Hot dip zinc-11% aluminum-3% magnesium-0.2% silicon plating (SD): sheet thickness = 0.8 mm, amount of plating = 60/60 (g_{/}m²)

### (2) Degreasing

The material was sprayed with a silicate based alkali degreasing agent "Fine Cleaner 4336" (registered trademark, made by Nihon Parkerizing) under conditions of a concentration of 20 g/liter and temperature of 60°C for 2 minutes, was rinsed with pure water for 30 seconds, and then dried to obtain a test sheet.

The silane coupling agents used for the examples and comparative examples are shown in Table 1, the vanadium compounds in Table 2, and the formulations, amounts of coating, and drying temperatures are shown in Tables 3 to 5.

### [Evaluation Test]

### 1. SST Flat Part Test

A salt spray test (SST) according to JIS Z 2371 was performed for 120 hours and the state of white rusting was examined.

### <Evaluation Criteria>

A=Rusting of less than 3% of total area
B=Rusting of 3 to less than 10% of total area
C=Rusting of 10% to less than 30% of total area
D=Rusting of 30% or more of total area

### 2. SST Worked Part Test

An Erichsen test (7 mm extrusion) was performed, then a salt spray test according to JIS Z 2371 was performed for 72 hours. The state of white rusting was examined.

### <Evaluation Criteria>

A=Rusting of less than 10% of total area
B=Rusting of 10% to less than 20% of total area
C=Rusting of 20% to less than 30% of total area
D=Rusting of 30% or more of total area

### 3. Heat Resistance Test

An oven was used for heating a test sheet at 200°C for 2 hours, and then the flat part was tested for corrosion resistance by a salt spray test according to JIS Z 2371 for 48 hours. The state of white rusting was examined.

### <Evaluation Criteria>

A=Rusting of less than 3% of total area
B=Rusting of 3% to less than 10% of total area
C=Rusting of 10% to less than 30% of total area
D=Rusting of 30% or more of total area

### 4. Fingermark Resistance Test

A color difference meter was used to measure the change in L value (ΔL) before and after coating with vaseline.

### <Evaluation Criteria>

A=ΔL of less than 0.5
B=ΔL of 0.5 to less than 1.0
C=ΔL of 1.0 to less than 2.0
D=ΔL of 2.0 or more

### 5. Conductivity Test

A surface insulation resistance measuring device was used to measure the surface insulation resistance.

### <Evaluation Criteria>

A=Surface insulation resistance of less than 1.0Ω
B=Surface insulation resistance of 1.0Ω to less than 2.0Ω
C=Surface insulation resistance of 2.0Ω to less than 3.0Ω
D=Surface insulation resistance of less than 3.0Ω

### 6. Coatability Test

A melamine alkyd-based coating was coated by a bar coater so as to have a film thickness of 25 micrometers after baking and drying, baked at 120°C for 20 minutes, then cut into a grid of 1 mm squares. The adhesion was evaluated by the ratio of the remaining square number (remaining square number/cut square number: 100).

### <Evaluation Criteria>

A=100%
B=95% or more
C=90% to less than 95%
D=less than 90%

### 7. Blackening Test

The degree of blackening in the case of working by a drawing ratio of 2.0 in a high speed deep drawing test was evaluated by the change in the L value before and after the test.
A=ΔL of less than 0.5
B=ΔL of 0.5 to less than 1.0
C=ΔL of 1.0 to less than 2.0
D=ΔL of 2.0 or more

The test results are shown in Tables 6 to 17. It is learned that Examples 1 to 68 exhibit corrosion resistances equivalent to chromate and satisfy all of the requirements of good corrosion resistance, heat resistance, fingermark resistance, conductivity, coatability, and blackening resistance at the time of working.

**Table 1**

| | Silane coupling agent |
|---|---|
| A1 | 3-aminopropyltrimethoxysilane |
| A2 | 3-aminopropyltriethoxysilane |
| B1 | 3-glycidoxypropyltrimethoxysilane |
| B2 | 3-glycidoxypropyltriethoxysilane |

**Table 2**

| | Vanadium compound |
|---|---|
| Z1 | Vanadium oxysulfate |
| Z2 | Vanadium dioxide |
| Z3 | Vanadium oxyacetylacetonate |
| Z4 | Vanadium acetylacetonate |

**Table 3**

| | Organic silicon compound (W) | | | | | Fluorocompound (X) | | Phosphoric acid (Y) | V compound (Z) | | | Coating am't | Drying temperature | Co-compound (C) |
|---|---|---|---|---|---|---|---|---|---|---|---|---|---|---|
| | Silane coupling agent | | Ratio | Functional group | Molecular weight | Type | Ratio | Ratio | Type | Ratio | | | | |
| | (A) | (B) | (A)/(B) | (a) no. | | | (X)/(W) | (Y) / (W) | | (Z) / (W) | (Z) / (X) | g/m² | °C | (C)/(W) |
| **Ex.** 1 | A1 | B1 | 0.5 | 2 | 1500 | Zr | 0.03 | 0.05 | Z1 | 0.07 | 2.3 | 0.35 | 120°C | - |
| Ex. 2 | A1 | B1 | 0.7 | 2 | 1500 | Zr | 0.03 | 0.06 | Z1 | 0.07 | 2.3 | 0.35 | 120°C | - |
| Ex. 3 | A1 | B1 | 1.0 | 2 | 1500 | Zr | 0.03 | 0.06 | Z1 | 0.07 | 2.3 | 0.35 | 120°C | - |
| Ex. 4 | A1 | B1 | 1.2 | 2 | 1500 | Zr | 0.03 | 0.06 | Z1 | 0.07 | 2.3 | 0.35 | 120°C | - |
| Ex. 5 | A1 | B1 | 1.5 | 2 | 1500 | Zr | 0.03 | 0.06 | Z1 | 0.07 | 2.3 | 0.35 | 120°C | - |
| Ex. 6 | A1 | B1 | 1.7 | 2 | 1500 | Zr | 0.03 | 0.06 | Z1 | 0.07 | 2.3 | 0.35 | 120°C | - |
| Ex. 7 | A1 | B2 | 1.0 | 2 | 1500 | Zr | 0.03 | 0.06 | Z1 | 0.07 | 2.3 | 0.35 | 120°C | - |
| Ex. 8 | A1 | B1 | 1.0 | 3 | 1500 | Zr | 0.03 | 0.06 | Z1 | 0.07 | 2.3 | 0.35 | 120°C | - |
| Ex. 9 | A1 | B1 | 1.0 | 2 | 1000 | Zr | 0.03 | 0.06 | Z1 | 0.07 | 2.3 | 0.35 | 120°C | - |
| Ex. 10 | A1 | B1 | 1.0 | 2 | 2000 | Zr | 0.03 | 0.06 | Z1 | 0.07 | 2.3 | 0.35 | 120°C | - |
| Ex. 11 | A1 | B1 | 1.0 | 2 | 4000 | Zr | 0.03 | 0.06 | Z1 | 0.07 | 2.3 | 0.35 | 120°C | - |
| Ex. 12 | A1 | B1 | 1.0 | 2 | 8000 | Zr | 0.03 | 0.06 | Z1 | 0.07 | 2.3 | 0.35 | 120°C | - |
| Ex. 13 | A1 | B1 | 1.0 | 2 | 10000 | Zr | 0.03 | 0.06 | Z1 | 0.07 | 2.3 | 0.35 | 120°C | - |
| Ex. 14 | A1 | B1 | 1.0 | 2 | 3000 | Zr | 0.02 | 0.06 | Z1 | 0.05 | 2.5 | 0.35 | 120°C | - |
| Ex. 15 | A1 | B1 | 1.0 | 2 | 3000 | Zr | 0.05 | 0.06 | Z1 | 0.12 | 2.4 | 0.35 | 120°C | - |
| Ex. 16 | A1 | B1 | 1.0 | 2 | 3000 | Zr | 0.07 | 0.06 | Z1 | 0.16 | 2.3 | 0.35 | 120°C | - |
| Ex. 17 | A1 | B1 | 1.0 | 2 | 3000 | Ti | 0.02 | 0.06 | Z1 | 0.05 | 2.5 | 0.35 | 120°C | - |
| Ex. 18 | A1 | B1 | 1.0 | 2 | 3000 | Ti | 0.05 | 0.06 | Z1 | 0.12 | 2.4 | 0.35 | 120°C | - |
| Ex. 19 | A1 | B1 | 1.0 | 2 | 3000 | Ti | 0.07 | 0.06 | Z1 | 0.16 | 2.3 | 0.35 | 120°C | - |
| Ex. 20 | A2 | B1 | 1.0 | 2 | 3000 | Ti | 0.05 | 0.03 | Z1 | 0.07 | 1.4 | 0.35 | 120°C | - |
| Ex. 21 | A2 | B1 | 1.0 | 2 | 3000 | Ti | 0.05 | 0.05 | Z1 | 0.07 | 1.4 | 0.35 | 120°C | - |
| Ex. 22 | A2 | B1 | 1.0 | 2 | 3000 | Ti | 0.05 | 0.07 | Z1 | 0.07 | 1.4 | 0.35 | 120°C | - |
| Ex. 23 | A2 | B1 | 1.0 | 2 | 3000 | Ti | 0.05 | 0.1 | Z1 | 0.07 | 1.4 | 0.35 | 120°C | - |
| Ex. 24 | A2 | B1 | 1.0 | 2 | 3000 | Ti | 0.05 | 0.12 | Z1 | 0.07 | 1.4 | 0.35 | 120°C | - |
| Ex. 25 | A2 | B2 | 1.0 | 2 | 3000 | Ti | 0.05 | 0.07 | Z1 | 0.07 | 1.4 | 0.35 | 120°C | - |
| Ex. 26 | A2 | B1 | 1.0 | 2 | 3000 | Ti | 0.06 | 0.07 | Z1 | 0.08 | 1.3 | 0.35 | 120°C | - |
| Ex. 27 | A2 | B1 | 1.0 | 2 | 3000 | Ti | 0.05 | 0.07 | Z1 | 0.10 | 2.0 | 0.35 | 120°C | - |
| Ex. 28 | A2 | B1 | 1.0 | 2 | 3000 | Ti | 0.05 | 0.07 | Z1 | 0.13 | 2.6 | 0.35 | 120°C | - |
| Ex. 29 | A2 | B1 | 1.0 | 2 | 3000 | Ti | 0.05 | 0.07 | Z1 | 0.15 | 3.0 | 0.35 | 120°C | - |
| Ex. 30 | A2 | B1 | 1.0 | 2 | 3000 | Ti | 0.05 | 0.07 | Z1 | 0.17 | 3.4 | 0.35 | 120°C | |
| Ex. 31 | A2 | B1 | 1.0 | 2 | 3000 | Ti | 0.03 | 0.07 | Z1 | 0.15 | 5.0 | 0.35 | 120°C | |
| Ex. 32 | A2 | B1 | 1.0 | 2 | 3000 | Ti | 0.02 | 0.07 | Z1 | 0.12 | 6.0 | 0.35 | 120°C | |
| Ex. 33 | A2 | B1 | 1.0 | 2 | 3000 | Ti | 0.05 | 0.07 | Z2 | 0.07 | 1.4 | 0.35 | 120°C | - |
| Ex. 33 | A2 | B1 | 1.0 | 2 | 3000 | Ti | 0.05 | 0.07 | Z2 | 0.10 | 2.0 | 0.35 | 120°C | - |

**Table 4**

| | Organic silicon compound (W) | | | | | Fluorocompound (X) | | Phosphoric acid (Y) | V compound (Z) | | | Coating am't | Drying temperature | Co-compound (C) |
|---|---|---|---|---|---|---|---|---|---|---|---|---|---|---|
| | Silane coupling agent | | Ratio | Functional group | Molecular weight | Type | Ratio | Ratio | Type | Ratio | | | | |
| | (A) | (B) | (A) / (B) | (a) no. | | | (X) / (W)) | (Y) / (W) | | (Z) / (W) | (Z) / (X) | g/m² | °C | (C) / (W) |
| Ex. 35 | A2 | B1 | 1.0 | 2 | 3000 | Ti | 0.05 | 0.07 | Z2 | 0.13 | 2.6 | 0.35 | 120°C | - |
| Ex. 36 | A2 | B1 | 1.0 | 2 | 3000 | Ti | 0.05 | 0.07 | Z3 | 0.07 | 1.4 | 0.35 | 120°C | - |
| Ex. 37 | A2 | B1 | 1.0 | 2 | 3000 | Ti | 0.05 | 0.07 | Z3 | 0.10 | 2.0 | 0.35 | 120°C | - |
| Ex. 38 | A2 | B1 | 1.0 | 2 | 3000 | Ti | 0.05 | 0.07 | Z3 | 0.13 | 2.6 | 0.35 | 120°C | - |
| Ex. 39 | A2 | B1 | 1.0 | 2 | 3000 | Ti | 0.05 | 0.07 | Z4 | 0.07 | 1.4 | 0.35 | 120°C | - |
| Ex. 40 | A2 | B1 | 1.0 | 2 | 3000 | Ti | 0.05 | 0.07 | Z4 | 0.10 | 2.0 | 0.35 | 120°C | - |
| Ex. 41 | A2 | B1 | 1.0 | 2 | 3000 | Ti | 0.05 | 0.07 | Z4 | 0.13 | 2.6 | 0.35 | 120°C | - |
| Ex. 42 | A2 | B1 | 1.0 | 2 | 3000 | Ti | 0.05 | 0.07 _{'} | Z5 | 0.07 | 1.4 | 0.35 | 120°C | - |
| Ex. 43 | A2 | B1 | 1.0 | 2 | 3000 | Ti | 0.05 | 0.07 | Z5 | 0.10 | 2.0 | 0.35 | 120°C | - |
| Ex. 44 | A2 | B1 | 1.0 | 2 | 3000 | Ti | 0.05 | 0.07 | Z5 | 0.13 | 2.6 | 0.35 | 120°C | - |
| Ex. 45 | A2 | B1 | 1.0 | 2 | 3000 | Ti | 0.05 | 0.07 | Z1 | 0.07 | 1.4 | 0.10 | 120°C | - |
| Ex. 46 | A2 | B1 | 1.0 | 2 | 3000 | Ti | 0.05 | 0.07 | Z1 | 0.07 | 1.4 | 0.15 | 120°C | - |
| Ex. 47 | A2 | B1 | 1.0 | 2 | 3000 | Ti | 0.05 | 0.07 | Z1 | 0.07 | 1.4 | 0.20 | 120°C | - |
| Ex. 48 | A2 | B1 | 1.0 | 2 | 3000 | Ti | 0.05 | 0.07 | Z1 | 0.07 | 1.4 | 0.25 | 120°C | - |
| Ex. 49 | A2 | B1 | 1.0 | 2 | 3000 | Ti | 0.05 | 0.07 | Z1 | 0.07 | 1.4 | 0.30 | 120°C | - |
| Ex. 50 | A2 | B1 | 1.0 | 2 | '3000 | Ti | 0.05 | 0.07 | Z1 | 0.07 | 1.4 | 0.40 | 120°C | - |
| Ex. 51 | A2 | B1 | 1.0 | 2 | 3000 | Ti | 0.05 | 0.07 | Z1 | 0.07 | 1.4 | 0.45 | 120°C | - |
| Ex. 52 | A2 | B1 | 1.0 | 2 | 3000 | Ti | 0.05 | 0.07 | Z1 | 0.07 | 1.4 | 0.50 | 120°C | - |
| Ex. 53 | A2 | B1 | 1.0 | 2 | 3000 | Ti | 0.05 | 0.07 | Z1 | 0.07 | 1.4 | 0.55 | 120°C | 0.02 |
| Ex. 54 | A2 | B1 | 1.0 | 2 | 3000 | Ti | 0.05 | 0.07 | Z1 | 0.07 | 1.4 | 0.60 | 120°C | 0.04 |
| Ex. 55 | A2 | B1 | 1.0 | 2 | 3000 | Ti | 0.05 | 0.07 | Z1 | 0.07 | 1.4 | 0.35 | 60°C | 0.06 |
| Ex. 56 | A2 | B1 | 1.0 | 2 | 3000 | Ti | 0.05 | 0.07 | Z1 | 0.07 | 1.4 | 0.35 | 70°C | - |
| Ex. 57 | A2 | B1 | 1.0 | 2 | 3000 | Ti | 0.05 | 0.07 | Z1 | 0.07 | 1.4 | 0.35 | 80°C | - |
| Ex. 58 | A2 | B1 | 1.0 | 2 | 3000 | Ti | 0.05 | 0.07 | Z1 | 0.07 | 1.4 | 0.35 | 90°C | - |
| Ex. 59 | A2 | B1 | 1.0 | 2 | 3000 | Ti | 0.05 | 0.07 | Z1 | 0.07 | 1.4 | 0.35 | 100°C | - |
| Ex. 60 | A2 | B1 | 1.0 | 2 | 3000 | Ti | 0.05 | 0.07 | Z1 | 0.07 | 1.4 | 0.35 | 110°C | - |
| Ex. 61 | A2 | B1 | 1.0 | 2 | 3000 | Ti | 0.05 | 0.07 | Z1 | 0.07 | 1.4 | 0.35 | 130°C | - |
| Ex. 62 | A2 | B1 | 1.0 | 2 | 3000 | Ti | 0.05 | 0.07 | Z1 | 0.07 | 1.4 | 0.35 | 140°C | - |
| Ex. 63 | A2 | B1 | 1.0 | 2 | 3000 | Ti | 0.05 | 0.07 | Z1 | 0.07 | 1.4 | 0.35 | 150°C | - |
| Ex. 64 | A2 | B1 | 1.0 | 2 | '3000 | Ti | 0.05 | 0.07 | Z1 | 0.07 | 1.4 | 0.35 | 160°C | - |
| Ex. 65 | A2 | B1 | 1.0 | 2 | 3000 | Ti | 0.05 | 0.07 | Z1 | 0.07 | 1.4 | | 170°C | - |
| Ex. 66 | A2 | B1 | 1.0 | 2 | 3000 | Ti | 0.05 | 0.07 | Z1 | 0.07 | 1.4 | 0.35 | 180°C | - |
| Ex. 67 | A2 | B1 | 1.0 | 2 | 3000 | Ti | 0.05 | 0.07 | Z1 | 0.07 | 1.4 | 0.35 | 190°C | - |
| Ex. 68 | A2 | B1 | 1.0 | 2 | 3000 | Ti | 0.05 | 0.07 | Z1 | 0.07 | 1.4 | | 200°C | - |

**Table 5**

| | Organic silicon compound (W) | | | | | Fluorocompound (X) | | Phosphoric acid (Y) | V compound (Z) | | | Coating am't | Drying temperature | Co-compound (C) |
|---|---|---|---|---|---|---|---|---|---|---|---|---|---|---|
| | Silane couplinq agent | | Ratio | Functional group | Molecular weight | Type | Ratio | Ratio | Type | Ratio | | | | |
| | (A) | (B) | (A) / (B)j | (a) no. | | | (X) / (W) | (Y) / (W) | | (Z) / (W) | (Z) / (X) | g/m² | °C | (C) / (W) |
| Comp. Ex. 1 | A1 | - | - | 1 | 500 | Zr | 0.03 | 0.06 | Z1 | 0.07 | 2.3 | 0.35 | 120°C | - |
| Comp. Ex. 2 | A1 | B1 | 0.4 | 2 | 2000 | Zr | 0.03 | 0.06 | Z1 | 0.07 | 2.3 | 0.35 | 120°C | - |
| Comp. Ex. 3 | A1 | B1 | 3.0 | 2 | 3400 | Zr | 0.03 | 0.06 | Z1 | 0.07 | 2.3 | 0.35 | 120°C | - |
| Comp. Ex. 4 | A1 | B1 | 1.0 | 2 | 3000 | - | - | 0.06 | Z1 | 0.07 | - | 0.35 | 120°C | - |
| Comp. Ex. 5 | A1 | B1 | 1.0 | 2 | 3000 | Zr | 0.03 | - | Z1 | 0.07 | 2.3 | 0.35 | 120°C | - |
| Comp. Ex. 6 | A1 | B1 | 1.0 | 2 | 3000 | Zr | 0.03 | 0.06 | - | - | - | 0.35 | 120°C | - |
| Comp. Ex. 7 | A1 | B1 | 1.0 | 2 | 3000 | Zr | 0.03 | 0.06 | Z1 | 0.07 | 2.3 | 0.03 | 120°C | - |
| Comp. Ex. 8 | A1 | B1 | 1.0 | 2 | 3000 | Zr | 0.03 | 0.06 | Z1 | 0.07 | 2.3 | 2.5 | 120°C | - |
| Comp. Ex. 9 | A1 | B1 | 1.0 | 2 | 3000 | Zr | 0.03 | 0.06 | Z1 | 0.07 | 2.3 | 0.35 | 50°C | - |
| Comp. Ex. 10 | A1 | B1 | 1.0 | 2 | 3000 | Zr | 0.03 | 0.06 | Z1 | 0.07 | 2.3 | 0.35 | 250°C | - |

**Table 6**

| | EG | | | | | | |
|---|---|---|---|---|---|---|---|
| | SST | | Heat resistance | Fingermark resistance | Conductivity | Coatability | Blackening |
| | Flat part | Worked part | | | | | |
| Ex. 1 | A | B | A | B | A | A | A |
| Ex. 2 | A | B | A | B | A | A | A |
| Ex. 3 | A | A | A | A | A | A | A |
| Ex. 4 | A | A | A | A | A | A | A |
| Ex. 5 | A | A | A | A | A | A | A |
| Ex. 6 | A | A | A | A | A | A | A |
| Ex. 7 | A | A | A | A | A | A | A |
| Ex. 8 | A | A | A | A | A | A | A |
| Ex. 9 | A | B | A | B | A | A | A |
| Ex. 10 | A | B | A | B | A | A | A |
| Ex. 11 | A | A | A | A | A | A | A |
| Ex. 12 | A | A | A | A | A | A | A |
| Ex. 13 | A | A | A | A | A | A | A |
| Ex. 14 | B | B | A | A | A | A | A |
| Ex. 15 | A | A | A | A | A | A | A |
| Ex. 16 | A | A | A | A | A | A | A |
| Ex. 17 | B | A | A | A | A | A | A |
| Ex. 18 | A | A | A | A | A | A | A |
| Ex. 19 | A | A | A | A | A | A | A |
| Ex. 20 | A | A | A | A | A | A | A |
| Ex. 21 | A | A | A | A | A | A | A |
| Ex. 22 | A | A | A | A | A | A | A |
| Ex. 23 | A | A | A | B | A | B | A |
| Ex. 24 | A | A | A | B | A | B | A |
| Ex. 25 | A | A | A | A | A | A | A |
| Ex. 26 | A | B | A | A | A | A | A |
| Ex. 27 | A | A | A | A | A | A | A |
| Ex. 28 | A | A | A | A | A | B | A |
| Ex. 29 | A | A | B | A | A | B | A |
| Ex. 30 | A | A | B | A | A | B | A |
| Ex. 31 | B | B | B | A | A | B | A |
| Ex. 32 | B | B | B | A | A | B | A |
| Ex. 33 | B | B | B | A | A | A | A |
| Ex. 34 | B | B | B | A | A | A | A |

**Table 7**

| | SST EG | | | | | | |
|---|---|---|---|---|---|---|---|
| | | | Heat resistance | Fingermark resistance | Conductivity | Coatability | Blackening |
| | Flat part | Worked part | | | | | |
| Ex. 35 | B | B | B | A | A | A | A |
| Ex. 36 | A | B | B | A | A | A | A |
| Ex. 37 | A | B | B | A | A | A | A |
| Ex. 38 | A | B | B | A | A | B | A |
| Ex. 39 | A | A | A | A | A | A | A |
| Ex. 40 | A | A | A | A | A | A | A |
| Ex. 41 | A | A | A | A | A | A | A |
| Ex. 42 | A | B | A | A | A | A | A |
| Ex. 43 | A | B | A | A | A | A | A |
| Ex. 44 | A | B | A | A | A | A | A |
| Ex. 45 | B | B | B | B | A | A | A |
| Ex. 46 | B | B | B | B | A | A | A |
| Ex. 47 | B | A | B | B | A | A | A |
| Ex. 48 | A | A | A | B | A | A | A |
| Ex. 49 | A | A | A | A | A | A | A |
| Ex. 50 | A | A | A | A | A | A | A |
| Ex. 51 | A | A | A | A | A | A | A |
| Ex. 52 | A | A | A | A | A | A | A |
| Ex. 53 | A | B | A | A | B | A | A |
| Ex. 54 | A | B | A | A | B | A | B |
| Ex. 55 | A | B | A | B | A | B | B |
| Ex. 56 | A | A | A | B | A | B | B |
| Ex. 57 | A | A | A | A | A | B | A |
| Ex. 58 | A | A | A | A | A | B | A |
| Ex. 59 | A | A | A | A | A | B | A |
| Ex. 60 | A | A | A | A | A | A | A |
| Ex. 61 | A | A | A | A | A | A | A |
| Ex. 62 | A | A | A | A | A | A | A |
| Ex. 63 | A | B | A | A | A | A | A |
| Ex. 64 | A | B | A | A | A | A | A |
| Ex. 65 | A | B | A | A | A | A | A |
| Ex. 66 | A | B | A | A | A | A | A |
| Ex. 67 | A | B | A | B | A | A | A |
| Ex. 68 | A | B | A | B | A | A | A |

**Table 8**

| | EG | | | | | | |
|---|---|---|---|---|---|---|---|
| | SST | | Heat resistance | Fingermark resistance | Conductivity | Coatability | Blackening |
| | Flat part | Worked part | | | | | |
| Comp. Ex. 1 | D | D | D | D | B | D | B |
| Comp. Ex. 2 | A | A | A | D | A | A | B |
| Comp. Ex. 3 | C | C | B | A | A | C | D |
| Comp. Ex. 4 | D | D | D | A | A | A | B |
| Comp. Ex. 5 | C | D | D | A | A | A | B |
| Comp. Ex. 6 | C | D | D | A | A | A | B |
| Comp. Ex. 7 | D | D | D | D | A | B | A |
| Comp. Ex. 8 | A | B | A | A | D | B | D |
| Comp. Ex. 9 | D | D | C | C | A | C | D |
| Comp. Ex. 10 | C | D | C | D | A | A | D |

**Table 9**

| | GI | | | | | | |
|---|---|---|---|---|---|---|---|
| | SST | | Heat resistance | Fingermark resistance | Conductivity | Coatability | Blackening |
| | Flat part | Worked part | | | | | |
| Ex. 1 | A | B | A | B | A | A | A |
| Ex. 2 | A | B | A | B | A | A | A |
| Ex. 3 | A | A | A | A | A | A | A |
| Ex. 4 | A | A | A | A | A | A | A |
| Ex. 5 | A | A | A | A | A | A | A |
| Ex. 6 | A | A | A | A | A | A | A |
| Ex. 7 | A | A | A | A | A | A | A |
| Ex. 8 | A | A | A | A | A | A | A |
| Ex. 9 | A | B | A | B | A | A | A |
| Ex. 10 | A | B | A | B | A | A | A |
| Ex. 11 | A | A | A | A | A | A | A |
| Ex. 12 | A | A | A | A | A | A | A |
| Ex. 13 | A | A | A | A | A | A | A |
| Ex. 14 | A | B | A | A | A | A | A |
| Ex. 15 | A | A | A | A | A | A | A |
| Ex. 16 | A | A | A | A | A | A | A |
| Ex. 17 | A | A | A | A | A | A | A |
| Ex. 18 | A | A | A | A | A | A | A |
| Ex. 19 | A | A | A | A | A | A | A |
| Ex. 20 | A | A | A | A | A | A | A |
| Ex. 21 | A | A | A | A | A | A | A |
| Ex. 22 | A | A | A | A | A | A | A |
| Ex. 23 | A | A | A | B | A | B | A |
| Ex. 24 | A | A | A | B | A | B | A |
| Ex. 25 | A | A | A | A | A | A | A |
| Ex. 26 | A | B | A | A | A | A | A |
| Ex. 27 | A | A | A | A | A | A | A |
| Ex. 28 | A | A | A | A | A | B | A |
| Ex. 29 | A | A | B | A | A | B | A |
| Ex. 30 | A | A | B | A | A | B | A |
| Ex. 31 | B | B | B | A | A | B | A |
| Ex. 32 | B | B | B | A | A | B | A |
| Ex. 33 | A | B | B | A | A | A | A |
| Ex. 34 | A | B | B | A | A | A | A |

**Table 10**

| | GI | | | | | | |
|---|---|---|---|---|---|---|---|
| | SST | | Heat resistance | Fingermark resistance | Conductivity | Coatability | Blackening |
| | Flat part | Worked part | | | | | |
| Ex. 35 | A | B | B | A | A | A | A |
| Ex. 36 | A | B | B | A | A | A | A |
| Ex. 37 | A | B | B | A | A | A | A |
| Ex. 38 | A | B | B | A | A | B | A |
| Ex. 39 | A | A | A | A | A | A | A |
| Ex. 40 | A | A | A | A | A | A | A |
| Ex. 41 | A | A | A | A | A | A | A |
| Ex. 42 | A | B | A | A | A | A | A |
| Ex. 43 | A | B | A | A | A | A | A |
| Ex. 44 | A | B | A | A | A | A | A |
| Ex. 45 | B | B | B | B | A | A | A |
| Ex. 46 | B | B | B | B | A | A | A |
| Ex. 47 | A | A | B | B | A | A | A |
| Ex. 48 | A | A | A | B | A | A | A |
| Ex. 49 | A | A | A | A | A | A | A |
| Ex. 50 | A | A | A | A | A | A | A |
| Ex. 51 | A | A | A | A | B | A | A |
| Ex. 52 | A | A | A | A | B | A | A |
| Ex. 53 | A | B | A | A | B | A | A |
| Ex. 54 | A | B | A | A | B | A | B |
| Ex. 55 | A | B | A | B | A | B | B |
| Ex. 56 | A | A | A | B | A | B | B |
| Ex. 57 | A | A | A | A | A | B | A |
| Ex. 58 | A | A | A | A | A | B | A |
| Ex. 59 | A | A | A | A | A | B | A |
| Ex. 60 | A | A | A | A | A | A | A |
| Ex. 61 | A | A | A | A | A | A | A |
| Ex. 62 | A | A | A | A | A | A | A |
| Ex. 63 | A | A | A | A | A | A | A |
| Ex. 64 | A | B | A | A | A | A | A |
| Ex. 65 | A | B | A | A | A | A | A |
| Ex. 66 | A | B | A | A | A | A | A |
| Ex. 67 | A | B | A | B | A | A | A |
| Ex. 68 | A | B | A | B | A | A | A |

**Table 11**

| | GI | | | | | | |
|---|---|---|---|---|---|---|---|
| | SST | | Heat resistance | Fingermark resistance | Conductivity | Coatability | Blackening |
| | Flat part | Worked part | | | | | |
| Comp. Ex. 1 | D | D | D | D | B | D | B |
| Comp. Ex. 2 | A | A | A | D | A | A | B |
| Comp. Ex. 3 | C | C | B | A | A | C | D |
| Comp. Ex. 4 | C | C | D | A | A | A | B |
| Comp. Ex. 5 | C | C | D | A | A | A | B |
| Comp. Ex. 6 | C | C | D | A | B | A | B |
| Comp. Ex. 7 | C | C | D | D | A | B | A |
| Camp. Ex. 8 | A | B | A | A | D | B | D |
| Comp. Ex. 9 | D | D | C | C | B | C | D |
| Comp. Ex. 10 | C | C | C | D | B | A | D |

**Table 12**

| | ZL | | | | | | |
|---|---|---|---|---|---|---|---|
| | SST | | Heat resistance | Fingermark resistance | Conductivity | Coatability | Blackening |
| | Flat part | Worked part | | | | | |
| Ex. 1 | A | B | A | B | A | A | A |
| Ex. 2 | A | B | A | B | A | A | A |
| Ex. 3 | A | A | A | A | A | A | A |
| Ex. 4 | A | A | A | A | A | A | A |
| Ex. 5 | A | A | A | A | A | A | A |
| Ex. 6 | A | A | A | A | A | A | A |
| Ex. 7 | A | A | A | A | A | A | A |
| Ex. 8 | A | A | A | A | A | A | A |
| Ex. 9 | A | B | A | B | A | A | A |
| Ex. 10 | A | B | A | B | A | A | A |
| Ex. 11 | A | A | A | A | A | A | A |
| Ex. 12 | A | A | A | A | A | A | A |
| Ex. 13 | A | A | A | A | A | A | A |
| Ex. 14 | B | B | A | A | A | A | A |
| Ex. 15 | A | A | A | A | A | A | A |
| Ex. 16 | A | A | A | A | A | A | A |
| Ex. 17 | B | A | A | A | A | A | A |
| Ex. 18 | A | A | A | A | A | A | A |
| Ex. 19 | A | A | A | A | A | A | A |
| Ex. 20 | A | A | A | A | A | A | A |
| Ex. 21 | A | A | A | A | A | A | A |
| Ex. 22 | A | A | A | A | A | A | A |
| Ex. 23 | A | A | A | B | A | B | A |
| Ex. 24 | A | A | A | B | A | B | A |
| Ex. 25 | A | A | A | A | A | A | A |
| Ex. 26 | A | B | A | A | A | A | A |
| Ex. 27 | A | A | A | A | A | A | A |
| Ex. 28 | A | A | A | A | A | B | A |
| Ex. 29 | A | A | A | A | A | B | A |
| Ex. 30 | A | A | A | A | A | B | A |
| Ex. 31 | A | B | A | A | A | B | A |
| Ex. 32 | B | B | A | A | A | B | A |
| Ex. 33 | B | B | A | A | A | A | A |
| Ex. 34 | B | B | A | A | A | A | A |

**Table 13**

| | ZL | | | | | | |
|---|---|---|---|---|---|---|---|
| | SST | | Heat resistance | Fingermark resistance | Conductivity | Coatability | Blackening |
| | Flat part | Worked part | | | | | |
| Ex. 35 | B | B | A | A | A | A | A |
| Ex. 36 | A | B | A | A | A | A | A |
| Ex. 37 | A | B | A | A | A | A | A |
| Ex. 38 | A | B | A | A | A | B | A |
| Ex. 39 | A | A | A | A | A | A | A |
| Ex. 40 | A | A | A | A | A | A | A |
| Ex. 41 | A | A | A | A | A | A | A |
| Ex. 42 | A | B | A | A | A | A | A |
| Ex. 43 | A | B | A | A | A | A | A |
| Ex. 44 | A | B | A | A | A | A | A |
| Ex. 45 | B | B | A | B | A | A | A |
| Ex. 46 | B | B | A | B | A | A | A |
| Ex. 47 | B | A | A | B | A | A | A |
| Ex. 48 | A | A | A | B | A | A | A |
| Ex. 49 | A | A | A | A | A | A | A |
| Ex. 50 | A | A | A | A | A | A | A |
| Ex. 51 | A | A | A | A | A | A | A |
| Ex. 52 | A | A | A | A | A | A | A |
| Ex. 53 | A | B | A | A | B | A | A |
| Ex. 54 | A | B | A | A | B | A | A |
| Ex. 55 | A | B | A | B | A | B | A |
| Ex. 56 | A | A | A | B | A | B | A |
| Ex. 57 | A | A | A | A | A | B | A |
| Ex. 58 | A | A | A | A | A | B | A |
| Ex. 59 | A | A | A | A | A | B | A |
| Ex. 60 | A | A | A | A | A | A | A |
| Ex. 61 | A | A | A | A | A | A | A |
| Ex. 62 | A | A | A | A | A | A | A |
| Ex. 63 | A | B | A | A | A | A | A |
| Ex. 64 | A | B | A | A | A | A | A |
| Ex. 65 | A | B | A | A | A | A | A |
| Ex. 66 | A | B | A | A | A | A | A |
| Ex. 67 | A | B | A | B | A | A | A |
| Ex. 68 | A | B | A | B | A | A | A |

**Table 14**

| | ZL | | | | | | |
|---|---|---|---|---|---|---|---|
| | SST | | Heat resistance | Fingermark resistance | Conductivity | Coatability | Blackening |
| | Flat part | Worked part | | | | | |
| Comp. Ex. 1 | D | D | D | D | B | D | B |
| Comp. Ex. 2 | A | A | A | D | A | A | B |
| Comp. Ex. 3 | C | C | B | A | A | C | D |
| Comp. Ex. 4 | D | D | D | A | A | A | B |
| Comp. Ex. 5 | C | D | D | A | A | A | B |
| Comp. Ex. 6 | C | D | D | A | A | A | B |
| Comp. Ex. 7 | D | D | D | D | A | B | A |
| Comp. Ex. 8 | A | B | A | A | D | B | C |
| Comp. Ex. 9 | D | D | C | C | A | C | C |
| Ex. 10 | C | D | C | D | A | A | C |

**Table 15**

| | SD | | | | | | |
|---|---|---|---|---|---|---|---|
| | SST | | Heat resistance | Fingermark resistance | Conductivity | Coatability | Blackening |
| | Flat part | Worked part | | | | | |
| Ex. 1 | A | A | A | B | A | A | A |
| Ex. 2 | A | A | A | B | A | A | A |
| Ex. 3 | A | A | A | A | A | A | A |
| Ex. 4 | A | A | A | A | A | A | A |
| Ex. 5 | A | A | A | A | A | A | A |
| Ex. 6 | A | A | A | A | A | A | A |
| Ex. 7 | A | A | A | A | A | A | A |
| Ex. 8 | A | A | A | A | A | A | A |
| Ex. 9 | A | A | A | B | A | A | A |
| Ex. 10 | A | A | A | B | A | A | A |
| Ex. 11 | A | A | A | A | A | A | A |
| Ex. 12 | A | A | A | A | A | A | A |
| Ex. 13 | A | A | A | A | A | A | A |
| Ex. 14 | A | A | A | A | A | A | A |
| Ex. 15 | A | A | A | A | A | A | A |
| Ex. 16 | A | A | A | A | A | A | A |
| Ex. 17 | A | A | A | A | A | A | A |
| Ex. 18 | A | A | A | A | A | A | A |
| Ex. 19 | A | A | A | A | A | A | A |
| Ex. 20 | A | A | A | A | A | A | A |
| Ex. 21 | A | A | A | A | A | A | A |
| Ex. 22 | A | A | A | A | A | A | A |
| Ex. 23 | A | A | A | B | A | B | A |
| Ex. 24 | A | A | A | B | A | B | A |
| Ex. 25 | A | A | A | A | A | A | A |
| Ex. 26 | A | B | A | A | A | A | A |
| Ex. 27 | A | A | A | A | A | A | A |
| Ex. 28 | A | A | A | A | A | B | A |
| Ex. 29 | A | A | B | A | A | B | A |
| Ex. 30 | A | A | B | A | A | B | A |
| Ex. 31 | B | B | B | A | A | B | A |
| Ex. 32 | B | B | B | A | A | B | A |
| Ex. 33 | A | A | B | A | A | A | A |
| Ex. 34 | A | A | B | A | A | A | A |

**Table 16**

| | SD | | | | | | |
|---|---|---|---|---|---|---|---|
| | SST | | Heat resistance | Fingermark resistance | Conductivity | Coatability | Blackening |
| | Flat part | Worked part | | | | | |
| Ex. 35 | A | A | B | A | A | A | A |
| Ex. 36 | A | A | B | A | A | A | A |
| Ex. 37 | A | A | B | A | A | A | A |
| Ex. 38 | A | A | B | A | A | B | A |
| Ex. 39 | A | A | A | A | A | A | A |
| Ex. 40 | A | A | A | A | A | A | A |
| Ex. 41 | A | A | A | A | A | A | A |
| Ex. 42 | A | A | A | A | A | A | A |
| Ex. 43 | A | A | A | A | A | A | A |
| Ex. 44 | A | A | A | A | A | A | A |
| Ex. 45 | A | A | B | B | A | A | A |
| Ex. 46 | A | A | B | B | A | A | A |
| Ex. 47 | A | A | B | B | A | A | A |
| Ex. 48 | A | A | A | B | A | A | A |
| Ex. 49 | A | A | A | A | A | A | A |
| Ex. 50 | A | A | A | A | A | A | A |
| Ex. 51 | A | A | A | A | B | A | A |
| Ex. 52 | A | A | A | A | B | A | A |
| Ex. 53 | A | A | A | A | B | A | A |
| Ex. 54 | A | A | A | A | B | A | B |
| Ex. 55 | A | A | A | B | A | B | B |
| Ex. 56 | A | A | A | B | A | B | B |
| Ex. 57 | A | A | A | A | A | B | A |
| Ex. 58 | A | A | A | A | A | B | A |
| Ex. 59 | A | A | A | A | A | B | A |
| Ex. 60 | A | A | A | A | A | A | A |
| Ex. 61 | A | A | A | A | A | A | A |
| Ex. 62 | A | A | A | A | A | A | A |
| Ex. 63 | A | A | A | A | A | A | A |
| Ex. 64 | A | A | A | A | A | A | A |
| Ex. 65 | A | A | A | A | A | A | A |
| Ex. 66 | A | A | A | A | A | A | A |
| Ex. 67 | A | A | A | B | A | A | A |
| Ex. 68 | A | A | A | B | A | A | A |

**Table 17**

| | SD | | | | | | |
|---|---|---|---|---|---|---|---|
| | SST | | Heat resistance | Fingermark resistance | Conductivity | Coatability | Blackening |
| | Flat part | Worked part | | | | | |
| Comp. Ex. 1 | D | D | D | D | B | D | B |
| Comp. Ex. 2 | A | A | A | D | A | A | B |
| Comp. Ex. 3 | C | C | B | A | A | C | D |
| Comp. Ex. 4 | C | C | D | A | A | A | B |
| Comp. Ex. 5 | C | C | D | A | A | A | B |
| Comp. Ex. 6 | C | C | D | A | B | A | B |
| Comp. Ex. 7 | C | C | D | D | A | B | A |
| Comp. Ex. 8 | A | B | A | A | D | B | D |
| Comp. Ex. 9 | D | D | C | C | B | C | D |
| Comp. Ex. 10 | C | C | C | D | B | A | D |

## Claims

1. A surface treated metal material, **characterized by** being comprised of a metal material having
(1) a surface, on which is coated and dried an aqueous metal surface treatment agent , wherein the coating and drying is conducted at a peak temperature higher than 50°C and less than 250°C to give a dried coating weight of 0.05 to 2.0 g/m²,
the aqueous metal surface treatment agent comprising:
(2) an organic silicon compound (W), obtained by blending a silane coupling agent (A) containing one amino group in its molecule and a silane coupling agent (B) containing one glycidyl group in its molecule in a solid weight ratio [(A)/(B)] of 0.5 to 1.7 and containing, in its molecule, at least two functional groups (a) of the formula -SiR¹R²R³(wherein, R¹, R², and R³ independently represent an alkoxy group or hydroxy group, at least one representing an alkoxy group) and one or more of at least one type of hydrophilic functional group (b) selected from hydroxy group (one separate from that able to be included in the functional group (a)) and an amino group, and having an average molecular weight of 1000 to 10000,
(3) at least one type of fluorocompound (X) selected from fluorotitanic acid or fluorozirconic acid,
(4) phosphoric acid (Y), and
(5) a vanadium compound (Z), .
so as to form a composite coating containing the different ingredients,
and among the ingredients of the composite coating,
(6) the solid weight ratio [(X)/(W)] of the organic silicon compound (W) and fluorocompound (X) being 0.02 to 0.07,
(7) the solid weight ratio [(Y)/(W)] of the organic silicon compound (W) and phosphoric acid (Y) being 0.03 to 0.12,
(8) the solid weight ratio [(Z)/(W)] of the organic silicon compound (W) and vanadium compound (Z) being 0.05 to 0.17, and
(9) the solid weight ratio [(Z)/(X)] of the fluorocompound (X) and vanadium compound (Z) being 1.3 to 6.0.

2. A surface treated metal material as set forth in claim 1, further containing, as an ingredient (C), in the coating, at least one type of cobalt compound selected from the group comprised of cobalt sulfate, cobalt nitrate, and cobalt carbonate, where the solid weight ratio [(C)/(W)] of said organic silicon compound (W) and cobalt compound (C) is 0.01 to 0.1.

3. A surface treated metal material of claim 1 or 2, wherein said metal material is a zinc-based plated steel sheet.

## Patentansprüche

1. Ein metallisches Material mit behandelter Oberfläche, **dadurch gekennzeichnet, dass** es ein metallisches Material umfasst, das
(1) eine Oberfläche, auf der ein wässriges Mittel zur Behandlung metallischer Oberflächen als Beschichtung aufgetragen und getrocknet wurde, aufweist, wobei die Beschichtung und Trocknung bei einer Höchsttemperatur von mehr als 50 °C und weniger als 250 °C durchgeführt werden, sodass sich ein Gewicht der getrockneten Beschichtung von 0,05 bis 2,0 g/m² ergibt und das wässrige Mittel zur Behandlung metallischer Oberflächen umfasst:
(2) eine organische Siliciumverbindung (W), erhalten durch Mischen eines Silan-Kupplungsmittels (A), enthaltend eine Aminogruppe in seinem Molekül, mit einem Silan-Kupplungsmittel (B), enthaltend eine Glycidylgruppe in seinem Molekül, in einem Feststoffgewichtsverhältnis [(A)/(B)] von 0,5 bis 1,7 und, enthaltend in seinem Molekül, mindestens zwei funktionelle Gruppen (a) der Formel -SiR¹R²R³ (wobei R¹, R² und R³ unabhängig voneinander einen Alkoxyrest oder eine Hydroxygruppe darstellen und mindestens einer einen Alkoxyrest darstellt) und eine oder mehrere von mindestens einer Art von hydrophiler funktioneller Gruppe (b), ausgewählt aus einer Hydroxygruppe (einer, die von der, die in der funktionellen Gruppe (a) enthalten sein kann, getrennt ist) und einer Aminogruppe und mit einem mittleren Molekulargewicht von 1 000 bis 10 000,
(3) mindestens eine Art von Fluorverbindung (X), ausgewählt aus Fluortitansäure oder Fluorzirkoniumsäure,
(4) Phosphorsäure (Y), und
(5) eine Vanadiumverbindung (Z),
um eine Komposit-Beschichtung, die die unterschiedlichen Bestandteile beinhaltet, zu bilden, und wobei für die Bestandteile der Komposit-Beschichtung gilt:
(6) das Feststoffgewichtsverhältnis [(X)/(W)] der organischen Siliciumverbindung (W) und der Fluorverbindung (X) 0,02 bis 0,07 beträgt,
(7) das Feststoffgewichtsverhältnis [(Y)/(W)] der organischen Siliciumverbindung (W) und der Phosphorsäure (Y) 0,03 bis 0,12 beträgt,
(8) das Feststoffgewichtsverhältnis [(Z)/(W)] der organischen Siliciumverbindung (W) und der Vanadium-Verbindung (Z) 0,05 bis 0,17 beträgt und
(9) das Feststoffverhältnis [(Z)/(X)] der Fluorverbindung (X) und der Vanadium-Verbindung (Z) 1,3 bis 6,0 beträgt.

2. Ein metallisches Material mit behandelter Oberfläche wie in Anspruch 1 dargelegt, weiter enthaltend als einen Bestandteil (C) in der Beschichtung mindestens eine Art einer Cobaltverbindung, ausgewählt aus der Gruppe umfassend Cobaltsulfat, Cobaltnitrat und Cobaltcarbonat, wobei das Feststoffgewichtsverhältnis [(C)/(W)] der organischen Siliciumverbindung (W) und der Cobaltverbindung (C) 0,01 bis 0,1 beträgt.

3. Ein metallisches Material mit behandelter Oberfläche nach Anspruch 1 oder 2, wobei das metallische Material ein auf Zink-Basis plattiertes Stahlblech ist.

## Revendications

1. Matériau de métal traité en surface, **caractérisé en ce qu'**il est constitué d'un matériau de métal présentant
(1) une surface, sur laquelle est déposé et séché un agent de traitement de surface de métal aqueux, dans lequel le dépôt et le séchage sont réalisés à une température de pic supérieure à 50°C et inférieure à 250°C pour fournir une masse de revêtement séchée de 0,05 à 2,0 g/m²,
l'agent de traitement de surface de métal aqueux comprenant :
(2) un composé organique du silicium (W), obtenu par combinaison d'un agent de couplage de silane (A) contenant un groupe amino dans sa molécule et d'un agent de couplage de silane (B) contenant un groupe glycidyle dans sa molécule dans un rapport massique solide [(A)/(B)] de 0,5 à 1,7 et contenant, dans sa molécule, au moins deux groupes fonctionnels (a) de la formule -SiR¹R²R³ (où R¹, R² et R³ représentent indépendamment un groupe alcoxy ou un groupe hydroxy, au moins un représentant un groupe alcoxy) et un ou plus d'au moins un type de groupe fonctionnel hydrophile (b) choisi parmi un groupe hydroxy (un séparé de celui apte à être compris dans le groupe fonctionnel (a)) et un groupe amino, et présentant une masse moléculaire moyenne de 1 000 à 10 000,
(3) au moins un type de fluorocomposé (X) choisi parmi l'acide fluorotitanique ou l'acide fluorozirconique,
(4) de l'acide phosphorique (Y), et
(5) un composé du vanadium (Z),
afin de former un revêtement composite contenant les différents ingrédients,
et parmi les ingrédients du revêtement composite,
(6) le rapport massique solide [(X)/(W)] du composé organique du silicium (W) et du fluorocomposé (X) étant de 0,02 à 0,07,
(7) le rapport massique solide [(Y)/(W)] du composé organique du silicium (W) et de l'acide phosphorique (Y) étant de 0,03 à 0,12,
(8) le rapport massique solide [(Z)/(W)] du composé organique du silicium (W) et du composé du vanadium (Z) étant de 0,05 à 0,17, et
(9) le rapport massique solide [(Z)/(X)] du fluorocomposé (X) et du composé du vanadium (Z) étant de 1,3 à 6,0.

2. Matériau de métal traité en surface selon la revendication 1, contenant de plus, comme un ingrédient (C), dans le revêtement, au moins un type de composé du cobalt choisi dans le groupe constitué du sulfate de cobalt, du nitrate de cobalt, et du carbonate de cobalt, dans lequel le rapport massique solide [(C)/(W)] desdits composé organique du silicium (W) et composé du cobalt (C) est de 0,01 à 0,1.

3. Matériau de métal traité en surface selon la revendication 1 ou 2, dans lequel ledit matériau de métal est une feuille en acier plaqué à base de zinc.
